# EUROPEAN PATENT APPLICATION

(11) **EP 4 398 176 A1**
(43) Date of publication of application: **10.07.2024**
(21) Application number: 23219653.5
(22) Date of filing: 22.12.2023
(51) Int. Cl.: G06Q 30/0601

(54) **AN ASSEMBLY FOR SUPPLY GOODS TO A BENEFICIARY**

(30) Priority: 09.01.2023 IT 202300000120
(71) Applicant: Berto, Giuliano, 35046 Borgo Veneto (PD) (IT); Peretti, Davide Giovanni, 35044 Montagnana (PD) (IT); Tognolo, Matteo, 35044 Montagnana (PD) (IT); Camatto, Giuanluigi, 20151 Milano (MI) (IT); Spanevello, Mirko, 36016 Thiene (VI) (IT)
(72) Inventor: Berto, Giuliano, 35046 Borgo Veneto (PD) (IT); Peretti, Davide Giovanni, 35044 Montagnana (PD) (IT); Tognolo, Matteo, 35044 Montagnana (PD) (IT); Camatto, Giuanluigi, 20151 Milano (MI) (IT); Spanevello, Mirko, 36016 Thiene (VI) (IT)
(74) Representative: Trentin, Michele

(57) **Abstract**

An assembly for supplying a good to a beneficiary (**D**). The assembly comprising: a control logic unit (**2**); a memory circuit (**3**); data entry means (**5**) for storing a database containing a list of one or more goods and a list of businesses capable of supplying the goods as well as the location of each business; a first remote device (**7**) available to a user (**U**) to select a good to be supplied. The assembly comprises a computer product for: asking the user (**U**) to enter a selection criterion for choosing the beneficiary (**D**); if the selection criterion for choosing the beneficiary (**D**) allows the identification of the beneficiary (**D**) only to businesses, identifying in the list of stored businesses a first subset of businesses that are able to supply the selected good and send to a first business of the first subset the unique coding element and the selection criterion for choosing the beneficiary (**D**); if the selection criterion immediately allows the identification of the beneficiary (**D**): identifying the location of the beneficiary (**D**); identifying a second subset of businesses that are able to supply the good and that are arranged in an area of predetermined size around the location of the beneficiary (**D**), the subset of businesses with the location of each being made available to the beneficiary (**D**) together with the unique coding element.

## Description

### Field of application

The present invention applies to the logistics sector and is particularly concerned with the supply of goods to third parties.

In more detail, the present invention relates to an assembly for managing the supply of a good to a beneficiary.

### State of the art

In the field of logistics, it may happen that a user needs to supply a good to a beneficiary without having the good in their possession and when the beneficiary is in areas of the globe also decidedly distant from the user themself.

An example of this is the need that often arises in users to offer a coffee or similar to a party that is located in another city, or another country or even in another continent.

As part of the logistics related to the delivery of goods, there are known organisational systems for which the user buys a good and chooses the delivery point from which they will pick it up. However, it is the party themself who chooses both the good and the point of the pick-up. These systems are therefore unsuitable for the purpose of allowing a user to choose a good to be supplied to a beneficiary other than themself and to leave the choice of the collection point to the latter.

With regard to the offer of a coffee or a food product in general, it is clear that the known systems mentioned above do not allow the execution of the service. In fact, it is not possible for a user to select the food product (for example, coffee), notify the beneficiary of the availability of a coffee and let the beneficiary choose where to redeem that food product.

There are also well-known organizations for the delivery of floral gifts via which a user goes to a flower shop, chooses a type of floral gift and the store takes care of contacting a fellow shopkeeper located in the vicinity of the beneficiary and orders an equivalent floral gift to be prepared and delivered to the beneficiary.

It is clear that this solution not only does not allow automation in the management of the service, but also in this case does not allow a user to select the good (for example, coffee), to notify the beneficiary of the availability, and to let the beneficiary choose where to redeem this good.

From all the above, it emerges that there are no known systems or assemblies that allow a user to supply a good, such as a coffee, to a beneficiary who is in another place and who has the possibility to choose, even at the last moment, where to collect, or redeem, this good. All this, however, allows the beneficiary to know which businesses can supply the good and allows the business to recognize the beneficiary.

Moreover, it should be noted that the known systems do not even allow the above to be performed with regard to unknown beneficiaries. In today's world, in fact, where social networks are widespread and widely used to allow people to have an alternative channel of socialization, there is an apparent need to be able also to offer a good as a gift to unknown parties or to parties known to the user, but selected at random. In this sense, none of the known assemblies for delivering goods to third parties allows a good to be selected and sent to a beneficiary according to a selection criterion between known or unknown parties.

### Presentation of the invention

The object of the present invention is to overcome at least partially the drawbacks highlighted above by providing an assembly and a method for the supply of a good to a beneficiary which allows a user to supply said good while not being in possession thereof and while being in a different place from that in which the beneficiary is located.

In particular, an object of the present invention is to provide an assembly and a method for the supply of a good to a beneficiary that allows said good to also be sent to an unknown party or in any case a party not directly selected by the party wishing to send the good.

Another object of the present invention is to provide an assembly and a method for the supply of a good to a beneficiary that allows the beneficiary to choose, even at the last moment, where to collect, or redeem, said good.

A further object of the present invention is to provide an assembly and a method for the supply of a good to a beneficiary that allows the business selected for the supply of the good to be able to determine with certainty that the good must be delivered to the beneficiary.

Another object of the present invention is to provide an assembly and a method for the supply of a good to a beneficiary that indicates to the beneficiary which businesses can supply the good.

In view of the above, and with reference to the examples cited above, an object of the present invention is to allow a user to offer a coffee or a similar food product to a third party who is located in another place and who may even be unknown.

Said objects, as well as others which will become clearer below, are achieved by an assembly and by a method of supplying a good to a beneficiary in accordance with the following claims, which are to be considered an integral part of the present patent.

In particular, the assembly comprises at least one control logic unit and at least one memory circuit operatively connected to the control logic unit. There are then data entry means in the memory circuit to store therein at least one database containing at least a list of one or more goods to be supplied to the beneficiary and at least a list of businesses capable of supplying the aforementioned goods from the list to the beneficiary. At least the location of each business in the list is also entered in the memory circuit.

According to one aspect of the invention, the assembly also comprises at least a first remote device available to a user configured to connect to the control logic unit and allow the user to select a good from the list of available goods to be supplied to the beneficiary.

Then there is a computer product stored in the memory circuit and suitable for execution by the control logic unit.

This computer product is first and foremost designed to ask the user to enter a selection criterion for choosing the beneficiary in order to identify them.

If the selection criterion allows the identification of the beneficiary only to businesses from said list of businesses, the computer product is configured to identify in the list of businesses stored in the database a first subset of businesses that are able to supply the selected good to the beneficiary and send to a first business of the first subset of businesses a unique coding element of the good to be supplied and the selection criterion of the beneficiary.

In other words, if the selection criterion set by the user entrusts the businesses that must supply the good with the exact identification of the beneficiary, then both the indication of the good and the selection criterion are sent to one of these businesses. One such example is a selection criterion that provides for the supply of the selected good to a person who has certain physical characteristics and who is located in a certain city and/or neighbourhood.

Advantageously, therefore, the assembly of the invention allows criteria to be set for the choice of parties to be given the good that lead not only to the selection of an unknown party, but also to the selection of a party typically unreachable by the user.

If, on the other hand, the selection criterion for choosing the beneficiary immediately allows the identification of the beneficiary (either because it is a party known to the user or because the programmable logic unit is in any case able to immediately identify the party in its database, for example among users enrolled in the same assembly), the computer product is configured first of all to identify the position of the beneficiary by means of identifying their position, identify in the list of businesses stored in the database a second subset of businesses that are able to supply the selected good to the beneficiary and that are located in an area of predetermined size around the position of the beneficiary. The computer product is also configured to send to the beneficiary, by means of a second remote device, the second subset of businesses with their location as well as the unique coding element.

In this way, advantageously, the beneficiary is made aware of the good intended for them and, by means of the unique coding element, is put in a position to collect it.

Still advantageously, the user can allocate this good to the beneficiary without being in possession of it and without being in the same place as the beneficiary.

Still advantageously, the beneficiary is given total freedom to choose where to collect the good. In fact, not only do they have available to them a list of businesses in the vicinity of the location they are in, or in any case supplied by them, that can supply the good, but they also have available to them the unique coding element that allows this collection. In fact, with this, the selected business can proceed to delivery in absolute safety.

Still advantageously, the assembly just described allows the beneficiary to collect the good from the business most suitable to them by choosing it at the desired time without any limitation.

At the same time, still advantageously, the user can supply the good without forcing the beneficiary to go to a predetermined business.

Coming to the example described above of coffee or a similar food product, the assembly of the invention allows a user, advantageously, to offer a coffee to a beneficiary wherever they are and without obligating the beneficiary to go to a specific bar, but leaving them the choice of where to go and when to use it. However, the beneficiary can be unknown and selected using an arbitrary selection criterion set by the user.

From a social point of view, this aspect advantageously provides an additional possibility of meeting new people and an additional possibility of forming new social bonds.

From the above, it is evident that said objects are also achieved by a method of supplying a good to a beneficiary using an assembly for supplying a good to a beneficiary described above and comprising the following steps:
- entering a selection criterion for choosing the beneficiary;
- selecting the good to be supplied from a list of one or more available goods;
- generating a unique coding element identifying at least the selected good;
- if said selection criterion for choosing the beneficiary allows the identification of the beneficiary only to said businesses from said list of businesses, identifying in said list of businesses stored in said database a first subset of businesses that are capable of supplying the selected good to the beneficiary and sending to a first business of said first subset of businesses said unique coding element and said selection criterion for choosing the beneficiary;
- if said selection criterion for choosing the beneficiary immediately allows the identification of the beneficiary:
   ∘ identifying the location of the beneficiary;
   ∘ identifying in said list of businesses stored in said database a second subset of businesses that are capable of supplying the selected good to the beneficiary and that are located in an area of predetermined size around said location of the beneficiary, said second subset of businesses with said location of each of said businesses of said subset of businesses being made available to the beneficiary;
   ∘ making available to the beneficiary also said unique coding element.

### Brief description of the drawings

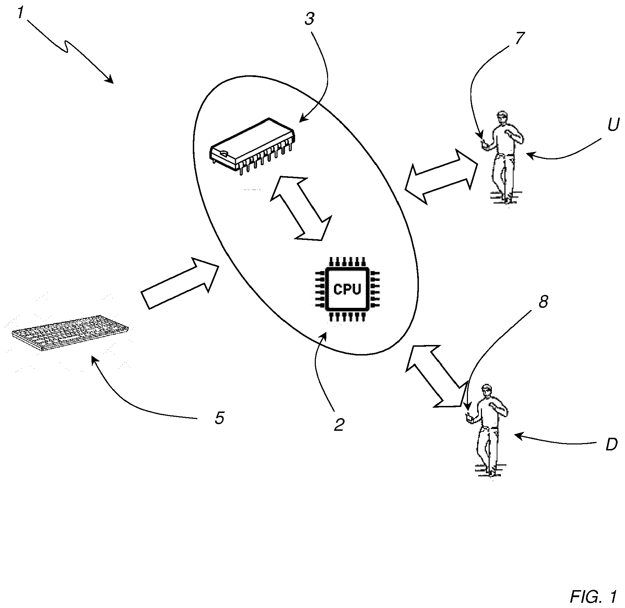

Further features and advantages of the invention will become more evident in light of the detailed description of a preferred but non-exclusive embodiment of an assembly and of a method of supplying a good to a beneficiary, illustrated by way of a non-limiting example with the aid of the accompanying table of drawings, wherein FIG. 1 represents an assembly for supplying a good to a beneficiary according to the invention in schematic view.

### Detailed description of some preferred exemplary embodiments

With reference to the aforementioned figure, an assembly 1 for the supply of a good to a beneficiary **D** is described.

The type of good to be supplied to the beneficiary **D** is not a limiting feature for the invention. However, the assembly **1** is well suited to allow users **U** to offer food products, such as coffee or similar, drinks or other, to friends, acquaintances, customers or suppliers, unknown people that the user wishes to approach or in any case chosen by a specific criterion.

To allow this, the assembly **1** first comprises a control logic unit **2** and a memory circuit **3** operatively connected to said control logic unit **2.**

In the detail of the embodiment that is described, the control logic unit **2** is constituted by a personal computer that performs the functionality of a server, but also this aspect must not be considered limiting for the present invention.

The number of control logic units and memory circuits are also not limiting features of the invention.

In addition to the components described so far, the assembly of the invention also comprises data entry means **5** in the memory circuit **3.**

Typically, such data entry means **5** comprise a keyboard, but even this feature should not be considered as a limiting feature for the invention, the data entry can be any means, even pre-set files transferred to the memory circuit.

What matters is what needs to be stored in the memory circuit **3.**

First, a database must be stored containing a list of one or more goods to be supplied to beneficiaries. Then a list of businesses capable of supplying one or more goods from the aforementioned list must also be stored. In particular, those businesses that have one or more goods on the list and that are available to provide them to beneficiaries **D** using the assembly **1** of the invention will be stored.

According to one aspect of the invention, the location of each business in the list must also be stored in the memory circuit **3.**

According to another aspect of the invention, the assembly **1** also comprises a first remote device **7** available to a user **U** and configured to connect to the control logic unit **2** and allow the user **U** to select a good from the list of goods to be supplied to the beneficiary **D.** According to the embodiment of the invention that is described, the first remote device **7** consists of a mobile communication device such as a smartphone or similar with a specific application, but also this aspect should not be considered as a limitation for other embodiments of the invention where, for example, the first remote device consists of another type of portable device or a fixed electronic computer with internet access. In the latter case, however, a specific web portal is available which the user can access to make the aforementioned selection.

According to a further aspect of the invention, the assembly **1** also comprises a computer product stored in the memory circuit **3** and suitable to be executed by the control logic unit **2** to generate a unique coding element identifying the selected good. Typically, the unique coding element consists of a linear or two-dimensional barcode, but also this aspect should not be considered limiting for different embodiments of the invention where, for example, the unique code consists of an alphanumeric code, a colour string or other. The only key factor is that, advantageously, the unique coding element uniquely and without the possibility of error specifies the good to be allocated to the beneficiary **D.**

The unique coding element may contain information that is unencrypted or encrypted with special security algorithms without any limit for the present invention. Moreover, in certain cases, additional information such as data relating to the beneficiary, static data, information on the costs of the good or other, may be included in this unique coding element, in accordance with the needs of the person who organizes the service, but also these aspects are not to be considered limiting for the invention. It is in fact evident that by conformation the unique coding element can contain multiple pieces of information in addition to the relevant information consisting of the unique identification of the selected good.

According to another aspect of the invention, the computer product is also configured to ask the user **U** to enter a selection criterion for choosing the beneficiary **D** in order to be able to identify it.

In fact, the assembly **1** of the invention can be used to allocate a good to a known beneficiary **D** perhaps present in the contact address book of the first remote device **7.** However, advantageously, it also allows the good to be allocated to an unknown beneficiary or otherwise selected by a generic selection criterion. For example, the user **U** could decide to supply the selected good to a blonde person in a certain age group selected with a pseudo-random selection algorithm applied to all the blond people registered in the supply assembly or even present in their contact address book. Or, as another example, they may decide to supply the good to the first person under **23** who enters a specific business. Or they may leave the random choice up to the same assembly **1** of the invention which will autonomously draw lots for a beneficiary **D.**

In this way it will be possible, advantageously, to create a reason for contact and new acquaintance with an unknown beneficiary **D.**

Obviously, the computer product of the assembly **1** of the invention is conformed to be able to address all the selection criteria indicated above.

In particular, if the selection criterion for choosing the beneficiary **D** allows the identification of the beneficiary **D** only for businesses in the list of businesses, the computer product configured to identify in the list of businesses stored in the database a first subset of businesses that are able to supply the selected good to the beneficiary **D** and send to a first business of said first subset of businesses the unique coding element and the selection criterion for choosing the beneficiary **D.** In this way, the first business will be aware of the selection criterion to be applied to identify the beneficiary **D** and the good to be supplied. The first business, therefore, will proceed by applying the criterion, identifying the beneficiary **D,** notifying them that the supply of the good by a user **U** has been allocated to them and providing the same good.

Advantageously, therefore, the assembly **1** of the invention allows a good to be supplied to an unknown beneficiary whose selection depends on a criterion chosen by the same user **U,** but whose application is carried out by the same business that must supply the good.

According to another aspect of the invention, if the selection criterion for choosing the beneficiary **D** immediately allows the identification of the beneficiary **D** (therefore without the good-supplying business having to identify the beneficiary **D**), the computer product is configured to identify the location of the beneficiary **D** by means of location identification means and identify in the list of businesses stored in the database a second subset of businesses that are able to supply the selected good to the beneficiary **D** and that are arranged in an area of predetermined dimensions around the location of the beneficiary **D.** The computer product is also configured to make available to the beneficiary the second subset of businesses with the location of each, as well as the unique coding element.

Advantageously, with the unique coding element, the beneficiary **D** is not only made aware of the good intended for them, but is also put in a position to collect it.

Still advantageously, the user **U** can allocate this good to the beneficiary **D** without being in possession of it and without being in the same place where the beneficiary **D** is located.

Advantageously, therefore, in addition to the unique coding element, the beneficiary **D** receives the indication of which businesses, in a predetermined environment of their position, they can go to in order to collect the good intended for them.

This still allows, advantageously, entrusting the beneficiary **D** with the choice of the business from which to collect the good.

In other words, still advantageously, the set of the unique coding element and the subset of businesses that are able to supply the selected good to the beneficiary **D** and that are arranged in an area of predetermined size around the position of the beneficiary allow a user **U** to send a good selected by them, but of which they are not in possession, to a beneficiary **D** also unknown (since they have been determined by a selection criterion that does not necessarily have to refer to the contacts of the user **U**) initially unaware of this delivery leaving the beneficiary **D** the possibility of choosing where to collect or redeem the good. This choice, still advantageously, can be made at any time.

So far it has been said that the database contains, amongst others, a list of businesses capable of supplying the selectable goods as well as the location of those businesses. This aspect must not be considered limiting for the invention, the database being able to contain further information. For example, according to some embodiments of the invention, the opening hours of each business are also present in the database in order to increase the degree of certainty for the beneficiary to be able to use the good by going to a specific business.

Still advantageously, from the point of view of the business that must supply the good, it is not necessarily made aware of having to perform this service except at the time when the beneficiary **D** shows up at the business itself. However, this does not affect the possibility of supplying the good for two reasons:
- the unique coding element and its possession indicate without the possibility of error which is the good to be delivered and which is the legitimate recipient party;
- the business can deliver the good or the beneficiary **D** can redeem the good since it is included in the list of businesses in the database in the memory circuit **3.**

With regard to the latter point, typically the entry of the business in the list of businesses present in the database capable of supplying one or more goods is carried out by the managers of the same business through the entry means which in this case are constituted by a specific web portal. Also in this case, however, this detail of execution of the invention should not be considered as limiting for different embodiments. What matters, in fact, is that the database contains a list of available goods and a list of businesses capable of providing them to a beneficiary **D** whatever the form of entering such data.

According to another aspect of the invention, the assembly **1** also comprises a second remote device **8** available to the beneficiary **D** and connected to the control logic unit **2** to receive the unique coding element.

Typically, the second remote device **8** also consists of a smartphone, but even this detail should not be considered limiting to the invention. In fact, the relevant aspect is to send the unique coding element to the beneficiary **D.** In this sense, if the latter is in possession of a smartphone with the aforementioned application installed, a special notification will be activated. If there is no such application, the beneficiary will receive the unique coding element by means of a classic message (sms or mms) or through social network applications such as Whatsapp or similar. Again, the beneficiary will also be able to receive the unique coding element by email.

From the above it is clear that also the fact that the second remote device **8** is constituted by a mobile communication device such as a smartphone or the like should not be understood as a limiting feature for the invention. In fact, it can consist of any mobile or fixed device (even a normal electronic computer) that allows the delivery of the unique coding element.

As regards the position identification means, according to the embodiment of the invention described, they comprise a GPS device contained in the second remote device **8** available to the beneficiary **D.** However, even this detail should not be considered as a limitation for different embodiments of the invention. For example, according to different embodiments, this position is manually provided by the same beneficiary **D** through a specific web portal.

Operationally, with the assembly **1** of the invention it is possible for a user **U** to supply a good to a beneficiary **D** whether it is known or unknown to the user **U** themself. In fact, the choice of the beneficiary is left to a selection criterion entered by the same user **U** at the request of the logical unit **2.**

In the second of the aforementioned cases, as a further example of those already made, according to one embodiment variant of the invention, the user can select a beneficiary from a list of beneficiaries stored in the database present in the memory circuit and composed, for example, of other users using the same assembly of the invention. This is also a selection criterion (the selection between unknown users of the same service)

In any case, operationally there will be a phase, carried out by the user **U,** of selection of the good to be supplied from the list of one or more available goods.

The unique coding element identifying the selected good will then be generated. This unique coding element is then sent to the beneficiary **D** if it is immediately identifiable through the selection criterion, or to the first business if this choice must be made directly by the supplier of the good.

In the first case, when the beneficiary **D** decides to collect or redeem the good, there will be a phase of identification of the position of the same beneficiary **D.**

With this location data, a subset of businesses is processed, from the list of businesses stored in the database, which are able to supply the selected good and which are located in an area of predetermined size around the location of the beneficiary **D.**

This subset is then provided to the beneficiary along with the location of each business it contains.

All that remains for the beneficiary to do is to go to the desired business and collect or redeem the good.

To facilitate this operation, there is also a step in which the beneficiary **D** chooses the desired business and a step in which there is the calculation and display of the best path to reach said business starting from the location of the beneficiary **D.**

In light of the foregoing, it is understood that the assembly and the method of supplying a good to a beneficiary of the invention achieves all the intended objects.

In particular, an object of the present invention is to provide an assembly and a method for the supply of a good to a beneficiary that allows said good to also be sent to an unknown party or in any case a party not directly selected by the party wishing to send the good.

Another object of the present invention is to provide an assembly and a method for the supply of a good to a beneficiary that allows the beneficiary to choose, even at the last moment, where to collect, or redeem, said good.

A further object of the present invention is to provide an assembly and a method for the supply of a good to a beneficiary that allows the business selected for the supply of the good to be able to determine with certainty that the good must be delivered to the beneficiary.

Another object of the present invention is to provide an assembly and a method for the supply of a good to a beneficiary that indicates to the beneficiary which businesses can supply the good.

In view of the above, and with reference to the examples cited above, an object of the present invention is to allow a user to offer a coffee or a similar food product to a third party who is located in another place and who may even be unknown.

In particular, they allow a user to supply this good despite not being in possession of it and despite being in a different place from that in which the beneficiary is located.

In addition, the beneficiary is allowed to choose, even at the last moment, where to collect, or redeem, this good.

The business selected for the supply of the good is also allowed to be able to recognize the beneficiary without error and to safely supply the selected good.

Moreover, it is possible for the user, by entering a selection criterion, to supply a good to an unknown beneficiary or in any case not directly selected by the person wishing to send the good.

In view of the above, and with reference to the examples mentioned above, a user is in particular allowed to offer a coffee or a similar food product to a third party who is located in another place and who may even be unknown.

The invention is subject to numerous modifications and variations, all falling within the appended claims. Moreover, all the details may furthermore be replaced by other technically equivalent elements, and the materials may be different if required, without departing from the scope of protection of the invention defined by the appended claims.

## Claims

1. An assembly for the supply of a good to a beneficiary **(D) characterized by** comprising:
- at least one control logic unit **(2);**
- at least one memory circuit **(3)** operatively connected to said control logic unit **(2);**
- data entry means **(5)** in said memory circuit **(3)** for storing in said memory circuit **(3)** at least one database containing at least one list of one or more goods to be supplied to the beneficiary **(D)** and at least one list of businesses capable of supplying one or more goods from said list of one or more goods to the beneficiary and at least the location of each business from said list of businesses;
- at least one first remote device **(7)** available to a user **(U)** configured to connect to said control logic unit **(2)** and allow the user **(U)** to select a good from said list of one or more goods to be supplied to the beneficiary **(D),**
said assembly comprising a computer product stored in said memory circuit **(3)** and suitable to be executed by said control logic unit **(2)** for:
- generating a unique coding element identifying at least the selected good;
- asking the user **(U)** to enter a selection criterion for choosing the beneficiary **(D)** in order to identify them;
- if said selection criterion for choosing the beneficiary **(D)** allows the identification of the beneficiary **(D)** only to businesses of said list of businesses, identifying in said list of businesses stored in said database a first subset of businesses that are able to supply the selected good to the beneficiary **(D)** and send to a first business of said first subset of businesses said unique coding element and said selection criterion for choosing the beneficiary **(D);**
- if said selection criterion for choosing the beneficiary **(D)** immediately allows the identification of the beneficiary **(D):**
∘ identifying the location of the beneficiary **(D)** by means of identification of a location of the beneficiary **(D);**
∘ identifying in said list of businesses stored in said database a second subset of businesses that are capable of supplying the selected good to the beneficiary **(D)** and that are arranged in an area of predetermined dimensions around said location of the beneficiary **(D),** said second subset of businesses with said location of each of said businesses of said subset of businesses being made available to the beneficiary **(D)** by means of a second remote device **(8);**
∘ making available to the beneficiary **(D)** by means of said second remote device **(8)** also said unique coding element.

2. The assembly according to Claim 1, **characterized in that** said unique coding element belongs to the set of linear and two-dimensional barcodes.

3. The assembly according to Claims 1 or 2, **characterized in that** said first remote device **(7)** and second remote device **(8)** comprise a mobile communication device.

4. The assembly according to one or more of the preceding claims, **characterised in that** said first remote device and second remote device comprise a computer.

5. The assembly according to one or more of the preceding claims, **characterized in that** said means for identification of a location of the beneficiary (D) comprise a GPS device available to the beneficiary **(D).**

6. The assembly according to one or more of the preceding claims, **characterized in that** said data entry means **(5)** comprise a web portal available to business managers capable of supplying one or more goods of said list of one or more goods so as to allow them to register their business within said list of businesses capable of supplying one or more goods of said list of one or more goods.

7. A method of supplying a good to a beneficiary **(D)** using an assembly **(1)** for supplying a good to a beneficiary **(D)** according to one or more of the preceding claims, **characterized in that** it comprises the following steps:
- entering a selection criterion for choosing the beneficiary **(D);**
- selecting the good to be supplied from a list of one or more available goods;
- generating a unique coding element identifying at least the selected good;
- if said selection criterion for choosing the beneficiary **(D)** allows the identification of the beneficiary **(D)** only to said businesses from said list of businesses, identifying in said list of businesses stored in said database a first subset of businesses that are able to supply the selected good to the beneficiary **(D)** and sending to a first business of said first subset of businesses said unique coding element and said selection criterion for choosing the beneficiary **(D);**
- if said selection criterion for choosing the beneficiary **(D)** immediately allows the identification of the beneficiary **(D):**
∘ identifying the location of the beneficiary **(D);**
∘ identifying in said list of businesses stored in said database a second subset of businesses that are capable of supplying the selected good to the beneficiary **(D)** and that are located in an area of predetermined size around said location of the beneficiary **(D),** said second subset of businesses with said location of each of said businesses of said subset of businesses being made available to the beneficiary (D);
∘ making available to the beneficiary **(D)** also said unique coding element.

8. The method according to Claim 7, **characterized in that** it comprises a step, performed by the beneficiary **(D)** and subsequent to said step of supplying to the beneficiary **(D)** said subset of businesses with at least said location of each business of said subset of businesses, of choosing in said subset of a business in which to receive the good.

9. The method according to Claim 8 **characterized in that** it comprises, after said choosing step, a step of calculating and displaying the best path to reach said business in which to receive the good.
